Europäisches Patentamt

European Patent Office

Office européen des brevets

(19)

(11) Publication number: **0 223 601 B1**

(12) # EUROPEAN PATENT SPECIFICATION

(45) Date of publication of patent specification: **30.09.92**   (51) Int. Cl.5: **H04N 1/40**

(21) Application number: **86309024.7**

(22) Date of filing: **18.11.86**

(54) **Image processing method.**

(30) Priority: **18.11.85 JP 259473/85**

(43) Date of publication of application:
**27.05.87 Bulletin 87/22**

(45) Publication of the grant of the patent:
**30.09.92 Bulletin 92/40**

(84) Designated Contracting States:
**DE GB IT**

(56) References cited:

PATENT ABSTRACTS OF JAPAN, vol. 5, no.
181 (E-83)[853], 20th November 1981; & JP-
A-56 109 069 (NIPPON DENKI K.K.) 29-08-1981

PATENT ABSTRACTS OF JAPAN, vol. 9, no.
95 (E-310)[1818], 24th April 1985; & JP-A-59
221 074 (HITACHI SEISAKUSHO K.K.)
12-12-1984

(73) Proprietor: **SHARP KABUSHIKI KAISHA
22-22 Nagaike-cho Abeno-ku
Osaka 545(JP)**

(72) Inventor: **Kotani, Matahira
337, Seya-Soujiji Sango-cho
Ikoma-gun Nara-ken(JP)**
Inventor: **Hayashi, Motohiko
109-21, Wakatsuki-cho
Yamatokoriyama-shi Nara-ken(JP)**
Inventor: **Yamanoue, Masafumi
492 Minosyo-cho
Yamatokoriyama-shi Nara-ken(JP)**

(74) Representative: **Brown, Kenneth Richard et al
R.G.C. Jenkins & Co. 26 Caxton Street
London SW1H 0RJ(GB)**

Rank Xerox (UK) Business Services

EP 0 223 601 B1

## Description

The present invention relates to a gradation image processing apparatus and a method for expressing a halftone-including image in a facsimile or the like with binary black-and-white pixels.

The purpose of an apparatus such as a facsimile machine for scanning and sampling an original to read out its image per pixel unit and copy the image thus read out is not to achieve faithful reproduction of the image, but to attempt to improve the image. This is attempted by processing the image signal to emphasise, or extract, specific data from the original image to eliminate the noise component included in the original image or restore the sharpness of the image.

In conventional image processing methods the noise is smoothed by first detecting the densities of specific pixels adjacent to a subject pixel, then taking the accumulated density frequency distribution per sampling level, and processing its average value as the density level of the subject pixel.

Although such image processing methods are effective in smoothing the reproduced image with elimination of granular noise, there are some disadvantages including loss of the contrast in the image signal in portions where the density change is great in the original image, i.e. the sharpness of the image is lost eventually rendering the image indistinct. Furthermore it is impossible to eliminate noise derived from the soiled surface of the original.

According to another conventional image processing method, the minimum level of specific pixels adjacent to a subject pixel is subtracted from the density level of the subject pixel, and the value thus obtained is regarded as the true density level of the latter pixel. However, in such image processing methods, the density-level variation range is reduced to consequently bring about lower contrast in the image as a whole. Another unavoidable drawback is that the granular noise cannot substantially be eliminated.

A system for binerization of a video signal is described in JP-56-109069.

The present invention has been accomplished in view of the above-mentioned problems known heretofore. And its principal object resides in providing an image processing method which eliminates both granular noise and noise derived from the soiled surface of an original, and corrects the gradation in a wide density variation range to reproduce a high-contrast image without causing a reduction in sharpness.

Another object of the invention is to provide an image processing apparatus capable of eliminating both granular noise and noise derived from a soiled surface of an original and correct the gradation in a wide density variation range to reproduce a high-contrast image without a deterioration in sharpness.

Other objects and further scope of applicability of the present invention will become apparent from the detailed description given hereinafter. It should be understood, however, that the detailed description of and specific examples, while indicating preferred embodiments of the invention, are given by way of illustration only, since various changes and modifications within the scope of the invention will become apparent to those skilled in the art from the detailed description.

According to a first aspect of the present invention, in order to attain the objects mentioned, there is provided an image processing method for digitising an original image comprising the steps:

splitting the original image into a two-dimensional matrix of picture elements, producing an initial image value for each picture element, and averaging the initial values of picture elements in a pair of mutually orthogonal directions around each picture element to produce an average density value; and

comparing the initial image value for each picture element with the average density value and determining a density level to be output in accordance with the value of the initial image value relative to the average density value, **characterised in that** the step of splitting the original image, producing an inital image value and averaging comprises the steps of:

scanning and sampling the original image in a line-by-line manner and developing a digital image signal therefrom, corresponding to a present line of picture elements;

calculating, for each of a set of picture elements extending in opposing directions along the line of picture elements from a subject picture element, a first average density value of the picture element and the adjacent picture element of the preceding line; and

calculating an average density value by averaging the first average density values for the set of picture elements.

In accordance with a second aspect of the invention there is provided an image processing system for digitizing an original image comprising:

means for splitting the original image into a two-dimensional matrix of picture elements, producing an initial image value for each picture element, and averaging the initial values of picture elements in a pair of mutually orthogonal directions around each picture element to produce an average density value; and

means for providing a density level output in accordance with the level of the initial image value relative to the average value, **characterised in that** the means for splitting the original image, producing an inital image value and averaging comprises:

means for scanning and sampling the original image in a line-by-line manner and developing a digital image signal thereform, corresponding to a present line of picture elements;

means for calculating, for each of a set of picture elements extending in opposing directions along the line of picture elements from a subject picture element, a first average density value of the picture element and the adjacent picture element of the preceding line; and

means for calculating an average density value by averaging the first average density values for the set of picture elements.

The present invention will become more fully understood from the detailed description given hereinbelow and the accompanying drawings which are given by way of example only, and thus are not limitative of the present invention and wherein:

Fig. 1(a) shows an example of pixel regions adjacent to a specific pixel plotted at the center;

Fig. 1 (b) schematically shows a pixel array with average values of vertical pixel data; and

Fig. 2 is a block diagram of an exemplary image processing apparatus designed to carry out the method of the present invention.

Hereinafter a preferred embodiment of the present invention will be described with reference to the accompanying drawings.

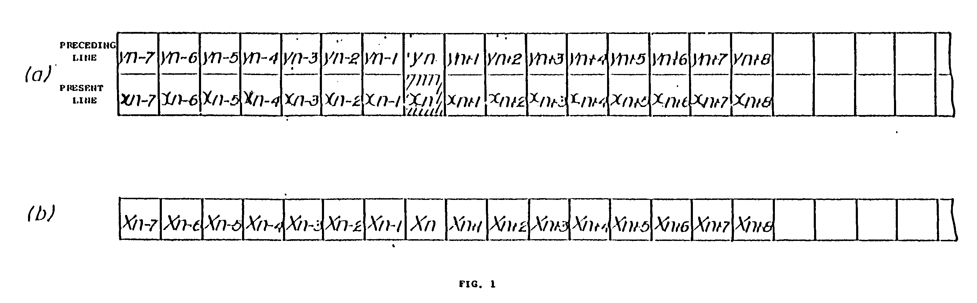

Fig. 1 (a) shows a 16 x 1 pixel region composed of pixels $x_{n-7}$ to $x_{n+8}$ inclusive of a subject pixel $x_n$ obtained by the present scanning, and another 16 x 1 pixel region composed of pixels $y_{n-7}$ to $y_{n+8}$ obtained by the preceding scanning. In this invention, the density gradation of the subject pixel $x_n$ is corrected in accordance with individual input data in such 2 x 16 pixel regions. According to the image processing method of the invention, out of the entire image signals of pixel units obtained by scanning and sampling the original image, the present-line pixels $x_{n-7}$, $x_{n-6}$, $x_{n-5}$, .... $x_n$, .... $x_{n+6}$, $x_{n+7}$ and $x_{n+8}$ inclusive of the subject pixel $x_n$ and the preceding-line pixels $y_{n-7}$, $y_{n-6}$, $y_{n-5}$, .... $y_n$, ... $y_{n+6}$, $y_{n+7}$ and $y_{n+8}$ corresponding positionally to the present-line ones are defined as a specific reference image region with respect to the subject pixel, then the average density level of the pixels constituting such specific reference cage region is detected, and subsequently such detected average density level of the specific reference pixel region is compared with the image input data of the subject pixel H, whereby the density gradation of the subject pixel $x_n$ is corrected.

The average density D'n in such specific reference pixel region can be computed from the following equation with respect to the subject pixel $x_n$.

$$D'n = \frac{\sum\limits_{n-7}^{n+8} x_n}{16} \qquad \ldots\ldots (1)$$

However, the result thus obtained from Eq. (1) represents the average density of merely the present-line pixels in the specific reference pixel region. Therefore, in order to compute the average density relative to the preceding-line region as well, this invention is so contrived as to first compute the average image input data of the present-line pixels and that of the preceding-line pixels positionally corresponding thereto, and then to take the average value of the respective input data to obtain the average density of the specific reference pixel region. The average value $X_{n\pm m}$ ($0 \leq m \leq 8$) of the pixels in the preceding line and the present line positionally corresponding to each other is expressed as

$$X_{n \pm m} = \frac{Y_{n \pm m} + x_{n \pm m}}{2} \qquad \ldots\ldots (2)$$

where $y_{n \pm m}$ ($0 \leq m \leq 8$) represents the image input data of the preceding-line pixels, and $x_{n \pm m}$ ($0 \leq m \leq 8$) represents the image input data of the present line pixels. As shown in Fig. 1 (b), an apparent single line can be assumed by taking the average of the preceding and present lines, thereby enabling adoption of Eq. (1) to eventually obtain the average density in the specific reference pixel region. Therefore, the above can be expressed as

$$D_n = \frac{\sum\limits_{n-7}^{n+8} X_n}{16} \quad \ldots \ldots (3)$$

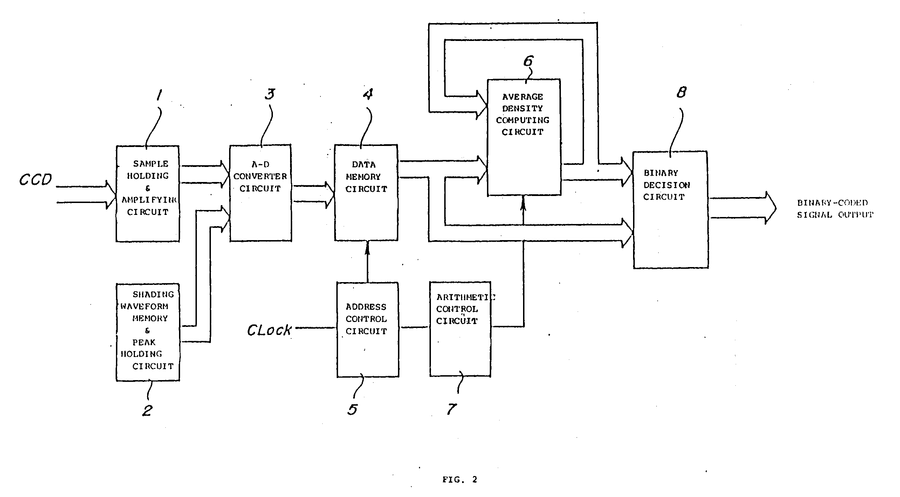

Fig. 2 shows an exemplary constitution of an image processing apparatus designed to carry out the method of this invention, wherein the analog image signal obtained by scanning an original image through the use of an image reader such as charge-coupled device (CCD) is sampled and amplified by a sample holding and amplifying circuit 1 and then is inputted to an analog-digital converter circuit 3. A shading waveform memory and peak holding circuit 2 is connected to the other input terminal of the analog-digital converter circuit 3 and performs a peak holding operation within the effective range of the image signal to produce a shading waveform output proportional to the peak value. The analog -digital converter circuit 3 corrects the shading of the input analog image signal from the sample holding and amplifying circuit 1 in accordance with the shading waveform received from the shading waveform memory and peak holding circuit 2 to produce a digital image data, which is then fed to a data memory circuit 4 and is stored at a predetermined address in accordance with a memory address instruction signal inputted from an address control circuit 5.

Subsequently, in response to an arithmetic control signal received from an arithmetic control circuit 7, an average density computing circuit 6 executes addition and subtraction of the digital image data inputted sequentially from the data memory circuit 4. Thus, the digital image data of the specific reference pixel region composed of the present-line pixels including the subject pixel and the preceding-line pixels positionally corresponding to the present-line pixels as shown in Fig. 1 are read out from the data memory circuit 4, and the average value of the specific reference pixel region is calculated from Eq. (2). And the value obtained as a result of such calculation is added to the 16-pixel component according to Eq. (3) to produce an average density output. In a binary decision circuit 8, the average density in the specific reference pixel region calculated by the average density computing circuit 6 is compared with the subject pixel data fed from the data memory circuit 4, and a decision as whether the subject pixel is to be reproduced in black or white is made on the basis of whether the calculated average density is less than or greater than the actual density value represented by the pixel data from the memory circuit 4. The result of such decision is outputted in the form of a binary signal.

In the manner described above, the average density of the subject pixel $x_n$ is computed and coded into a binary form.

Although the foregoing procedure may be executed again for binary-coding the next subject pixel $x_{n+1}$ as well, the present invention is so contrived as to effectively utilizing the average density $D_n$ already computed relative to the first subject pixel $x_n$, and the average density $D_{n+1}$ of the second subject pixel $x_{n+1}$ next to the first subject pixel $x_n$ is obtained from the following equation.

$$D_{n+1} = D_n + \frac{X_{n+9} - X_{n-7}}{16} \quad \ldots \ldots (4)$$

That is, an accumulated value of the 2nd through 17th pixels is obtained by substracting the data of the 1st pixel from the accumulated data of the 1st through 16th pixels and then adding the data of the 17th pixel thereto. And subsequently such procedure is repeated to encode the present-line pixels into a binary value.

As described hereinabove, the image processing apparatus and method of the present invention are so constituted that, relative to each of the pixel units obtained by scanning and sampling the original image, a first average density level is detected to represent the average density level of the pixel unit within a first specific reference pixel region composed of pixel unit groups adjacent to the subject pixel unit leftward and rightward, and a second average density level is detected to represent the average density level of the pixel unit within a second specific reference pixel region composed of a pixel unit group adjacent to the first specific reference pixel region upward; and the density level of the subject pixel unit is determined in accordance with the first and second average density levels, so that the gradation is rendered correctable. Consequently, it becomes possible to eliminate with certainty both granular noise in the original image and any noise component derived from its soiled surface. And furthermore, correction of the gradation can be executed with a sufficient margin in the density variation range, hence realizing satisfactory image

EP 0 223 601 B1

reproduction with a high sharpness.

While only certain embodiments of the present invention have been described, it will be apparent to those skilled in the art that various changes and modifications may be made therein without departing from the scope of the present invention as claimed.

**Claims**

1. An image processing method for digitizing an original image comprising the steps:

splitting the original image into a two-dimensional matrix of picture elements, producing an initial image value for each picture element, and averaging the initial values of picture elements in a pair of mutually orthogonal directions around each picture element to produce an average density value; and

comparing the initial image value for each picture element with the average density value and determining a density level to be output in accordance with the value of the initial image value relative to the average density value, **characterised in that** the step of splitting the original image, producing an inital image value and averaging comprises the steps of:

scanning and sampling the original image in a line-by-line manner and developing a digital image signal thereform, corresponding to a present line of picture elements;

calculating, for each of a set of picture elements extending in opposing directions along the line of picture elements from a subject picture element, a first average density value of the picture element and the adjacent picture element of the preceding line; and

calculating an average density value by averaging the first average density values for the set of picture elements.

2. A method according to claim 1 wherein the image processing method is a method for expressing an original black-and-white image including halftones and reproducing the original image in the form of a binary coded output.

3. An image processing method according to claim 1 or 2 of the present invention wherein the set of picture elements comprises the seven neighbouring picture elements in one direction along the line and the eight neighbouring picture elements in the opposite direction along the line.

4. An image processing system for digitizing an original image comprising:

means for splitting the original image into a two-dimensional matrix of picture elements, producing an initial image value for each picture element, and averaging the initial values of picture elements in a pair of mutually orthogonal directions around each picture element to produce an average density value; and

means for providing a density level output in accordance with the level of the initial image value relative to the average value, **characterised in that** the means for splitting the original image, producing an inital image value and averaging comprises:

means for scanning and sampling the original image in a line-by-line manner and developing a digital image signal thereform, corresponding to a present line of picture elements;

means for calculating, for each of a set of picture elements extending in opposing directions along the line of picture elements from a subject picture element, a first average density value of the picture element and the adjacent picture element of the preceding line; and

means for calculating an average density value by averaging the first average density values for the set of picture elements.

5. A system according to claim 4 wherein the image processing system is a system for expressing an original black-and-white image including halftones and reproducing the original image in the form of a binary coded output.

6. An image processing system according to claim 4 or 5 of the present invention wherein the set of picture elements comprises the seven neighbouring picture elements in one direction along the line and the eight neighbouring picture elements in the opposite direction along the line.

**Patentansprüche**

1. Bildverarbeitungsverfahren zur Digitalisierung eines Originalbilds mit folgenden Verfahrensschritten:

5

Aufspalten des Originalbilds in eine zweidimensionale Matrix von Bildelementen, Erzeugen eines anfänglichen Bildwerts für jedes Bildelement und Mitteln der Anfangswerte von Bildelementen in einem Paar von gegenseitig orthogonalen Richtungen um jedes Bildelement um einen gemittelten Dichtewert zu erzeugen; und

Vergleichen des anfänglichen Bildwerts jedes Bildelements mit dem gemittelten Dichtewert und Bestimmen eines auszugebenden Dichtepegels in Übereinstimmung mit dem Wert des anfänglichen Bildwerts relativ zum gemittelten Dichtewert, **dadurch gekennzeichnet**, daß der Verfahrensschritt des Aufspaltens des Originalbilds, des Erzeugens eines anfänglichen Bildwerts und der Mittelung folgende Schritte umfaßt:

Zeilenweises Abtasten und Sampeln des Originalbilds mit daraus folgendem Erzeugen eines digitalen Bildsignals, das einer momentanen Zeile von Bildelementen entspricht;

Errechnen eines ersten gemittelten Dichtewerts der Bildelemente und der angrenzenden Bildelemente der vorhergehenden Zeile für jedes eines Satzes von Bildelementen, die sich in entgegengesetzten Richtungen entlang der Zeile von Bildelementen von einem betreffenden Bildelement aus erstrecken; und

Errechnen eines gemittelten Dichtewerts durch Mittelwertbildung bezüglich der ersten gemittelten Dichtewerte für den Satz von Bildelementen.

**2.** Verfahren nach Anspruch 1, bei welchem die Bildverarbeitung gemäß einem Verfahren erfolgt, bei dem ein Original-Schwarz-Weiß-Bild einschließlich Graustufen erfaßt und das Originalbild in Form von binär-kodierten Ausgangssignalen reproduziert wird.

**3.** Verfahren nach Anspruch 1 oder 2, bei welchem der Satz von Bildelementen sieben benachbarte Bildelemente in der einen Richtung entlang der Zeile und acht benachbarte Bildelemente in der entgegengesetzten Richtung entlang der Zeile umfaßt.

**4.** Bildverarbeitungseinrichtung zur Digitalisierung eines Originalbilds mit

Mitteln zum Aufspalten des Originalbilds in eine zweidimensionale Matrix von Bildelementen, zum Erzeugen eines anfänglichen Bildwerts für jedes Bildelement und zum Mitteln der Anfangswerte der Bildelemente hinsichtlich eines Paars von zueinander orthogonalen Richtungen um jedes Bildelement um einen gemittelten Dichtewert zu erzeugen, und mit Mitteln zum Bereitstellen eines Dichtepegelausgangs entsprechend dem Pegel des anfänglichen Bildwerts relativ zu dem gemittelten Wert, **dadurch gekennzeichnet**, daß die Mittel zum Aufspalten des Originalbilds, zum Erzeugen des anfänglichen Bildwerts und zur Mittelwertbildung folgende Baugruppen umfassen:

Mittel zum zeilenweisen Abtasten und Sampeln des Originalbilds, um daraus ein digitales Bildsignal zu erzeugen, das einer bestimmten momentanen Zeile von Bildelementen entspricht;

Mittel zum Berechnen eines ersten gemittelten Dichtewerts der Bildelemente und der benachbarten Bildelemente der vorhergehenden Zeile für jede eines Satzes von Bildelementen, die sich in entgegengesetzte Richtungen entlang der Zeile von Bildelementen von einem betreffenden Bildelement aus erstrecken; und

Mittel zum Berechnen eines gemittelten Dichtewerts durch Mittelwertbildung bezüglich der ersten gemittelten Dichtewerte für den Satz von Bildelementen.

**5.** Einrichtung nach Anspruch 4, bei welcher ein Original-Schwarz-Weiß-Bild einschließlich von Grautönen erfaßt und das Originalbild in Form von binär-kodierten Ausgangssignalen reproduziert wird.

**6.** Bildverarbeitungseinrichtung nach Anspruch 4 oder 5, bei welcher der Satz von Bildelementen sieben benachbarte Bildelemente in einer Richtung entlang der betreffenden Zeile und acht benachbarte Bildelemente in der entgegengesetzten Zeilenrichtung umfaßt.

**Revendications**

**1.** Procédé de traitement d'images pour numériser une image originale, comprenant les étapes consistant:

à diviser l'image originale en une matrice bidimensionnelle d'éléments d'image, à produire une valeur d'image initiale pour chaque élément d'image, et à établir la moyenne des valeurs initiales d'éléments d'image dans une paire de directions mutuellement orthogonales autour de chaque élément d'image pour produire une valeur de densité moyenne; et

à comparer la valeur d'image initiale pour chaque élément d'image à la valeur de densité moyenne et déterminer un niveau de densité à délivrer en sortie conformément à la valeur de la valeur d'image initiale par rapport à la valeur de densité moyenne, caractérisé en ce que l'étape consistant à diviser l'image originale, à produire une valeur d'image initiale et à établir la moyenne comprend les étapes consistant:

à analyser et échantillonner l'image originale, ligne par ligne, et à élaborer, à partir de cette opération, un signal d'image numérique, correspondant à une ligne courante d'éléments d'image;

à calculer, pour chaque élément d'une série d'éléments d'image s'étendant dans des directions opposées le long de la ligne d'éléments d'image à partir d'un élément d'image traité, une première valeur de densité moyenne de l'élément d'image et de l'élément d'image adjacent de la ligne précédente; et

à calculer une valeur de densité moyenne en établissant la moyenne des premières valeurs de densité moyenne pour la série d'éléments d'image.

2. Procédé selon la revendication 1, dans lequel le procédé de traitement d'image est un procédé servant à exprimer une image originale en noir et blanc comprenant des demi-teintes et à reproduire l'image originale sous la forme d'une sortie codée en binaire.

3. Procédé de traitement d'image selon la revendication 1 ou la revendication 2 de la présente invention, dans lequel la série d'éléments d'image comprend les sept éléments d'image voisins dans une direction le long de la ligne et les huit éléments d'image voisins dans la direction opposée le long de la ligne.

4. Système de traitement d'image destiné à numériser une image originale, comprenant:

des moyens pour diviser l'image originale en une matrice bidimensionnelle d'éléments d'image, produire une valeur d'image initiale pour chaque élément d'image, et établir la moyenne des valeurs initiales d'éléments d'image dans une paire de directions mutuellement orthogonales autour de chaque élément d'image pour produire une valeur de densité moyenne; et

des moyens pour fournir une sortie de niveau de densité conformément au niveau de la valeur d'image initiale relativement à la valeur moyenne, caractérisé en ce que les moyens servant à diviser l'image originale, à produire une valeur d'image initiale et à établir la moyenne comprennent:

des moyens servant à analyser et échantillonner l'image originale, ligne par ligne, et à élaborer, à partir de cette opération, un signal d'image numérique, correspondant à une ligne courante d'éléments d'image;

des moyens servant à calculer, pour chaque élément d'une série d'éléments d'image s'étendant dans des directions opposées le long de la ligne d'éléments d'image à partir d'un élément d'image traité, une première valeur de densité moyenne de l'élément d'image et de l'élément d'image adjacent de la ligne précédente; et

des moyens servant à calculer une valeur de densité moyenne en établissant la moyenne des premières valeurs de densité moyenne pour la série d'éléments d'image.

5. Système selon la revendication 4, dans lequel le système de traitement d'image est un système servant à exprimer une image originale en noir et blanc comprenant des demi-teintes et à reproduire l'image originale sous la forme d'une sortie codée en binaire.

6. Système de traitement d'image selon la revendication 4 ou la revendication 5 de la présente invention, dans lequel la série d'éléments d'image comprend les sept éléments d'image voisins dans une direction le long de la ligne et les huit éléments d'image voisins dans la direction opposée le long de la ligne.

(a)

| PRECEDING LINE | $y_{n-7}$ | $y_{n-6}$ | $y_{n-5}$ | $y_{n-4}$ | $y_{n-3}$ | $y_{n-2}$ | $y_{n-1}$ | $y_n$ | $y_{n+1}$ | $y_{n+2}$ | $y_{n+3}$ | $y_{n+4}$ | $y_{n+5}$ | $y_{n+6}$ | $y_{n+7}$ | $y_{n+8}$ | | | | | |
|---|---|---|---|---|---|---|---|---|---|---|---|---|---|---|---|---|---|---|---|---|---|
| PRESENT LINE | $x_{n-7}$ | $x_{n-6}$ | $x_{n-5}$ | $x_{n-4}$ | $x_{n-3}$ | $x_{n-2}$ | $x_{n-1}$ | $x_n$ | $x_{n+1}$ | $x_{n+2}$ | $x_{n+3}$ | $x_{n+4}$ | $x_{n+5}$ | $x_{n+6}$ | $x_{n+7}$ | $x_{n+8}$ | | | | | |

(b)

| $x_{n-7}$ | $x_{n-6}$ | $x_{n-5}$ | $x_{n-4}$ | $x_{n-3}$ | $x_{n-2}$ | $x_{n-1}$ | $x_n$ | $x_{n+1}$ | $x_{n+2}$ | $x_{n+3}$ | $x_{n+4}$ | $x_{n+5}$ | $x_{n+6}$ | $x_{n+7}$ | $x_{n+8}$ | | | | | |
|---|---|---|---|---|---|---|---|---|---|---|---|---|---|---|---|---|---|---|---|---|

FIG. 1

FIG. 2